# FASCICULE DE BREVET EUROPEEN

(11) **EP 1 768 832 B1**
(45) Date de publication et mention de la délivrance du brevet: **18.11.2009**
(21) Numéro de dépôt: 05753892.8
(22) Date de dépôt: 08.06.2005
(51) Int. Cl.: B29C 49/68, B29C 49/78

(54) **CIRCUIT DE REFROIDISSEMENTPOUR UN FOUR À PRÉFORMES ET PROCÉDÉ DE MISE EN OEUVRE D'UN TEL CIRCUIT**
KÜHLKREISLAUF FÜR EINEN VORFORMLING-OFEN UND VERFAHREN ZUR IMPLEMENTIERUNG SOLCH EINES KREISLAUFS
COOLING CIRCUIT FOR A PREFORM OVEN AND METHOD OF IMPLEMENTING ONE SUCH CIRCUIT

(30) Priorité: 15.06.2004 FR 0451178
(43) Date de publication de la demande: 04.04.2007
(73) Titulaire: SIDEL PARTICIPATIONS, 76930 Octeville-sur-Mer (FR)
(72) Inventeur: MIE, Patrick, SIDEL PARTICIPATIONS, F-76930 Octeville sur Mer (FR)
(74) Mandataire: Kohn, Philippe
(86) Numéro de dépôt international: PCT/EP2005/052637
(87) Numéro de publication internationale: WO 2005/123367

(56) Documents cités:
- DE-U- 20 309 576
- FR-A- 2 796 588
- US-A- 5 681 521
- US-B1- 6 361 301

## Description

L'invention concerne un circuit de refroidissement pour un tunnel de chauffage de préformes et un procédé de mise en oeuvre des moyens de régulation de la température dudit circuit.

L'invention concerne plus particulièrement un circuit de refroidissement pour un tunnel de chauffage de préformes du type comportant une première et une seconde rampes parallèles de refroidissement, à l'intérieur desquelles circule un fluide caloporteur, et qui bordent une ouverture longitudinale du tunnel de chauffage le long de laquelle les préformes sont déplacées, du type comportant une conduite commune d'entrée qui est alimentée en fluide caloporteur froid et qui est raccordée en parallèle à une extrémité amont de chaque rampe de refroidissement, et comportant une conduite commune de sortie du fluide caloporteur chaud qui est raccordée en parallèle à l'extrémité aval de chaque rampe de refroidissement, du type comportant une vanne de renouvellement du fluide caloporteur qui est intercalée dans l'une des conduites communes d'entrée ou de sortie, le circuit de refroidissement comportant des moyens pour mesurer la température du fluide caloporteur, du type comportant une conduite de dérivation dont l'extrémité amont est raccordée à la conduite commune de sortie et dont l'extrémité aval est raccordée à la conduite commune d'entrée de façon à former une boucle fermée de recirculation du fluide caloporteur dans les rampes de refroidissement lorsque la vanne de renouvellement est fermée, et du type dans lequel la boucle de recirculation comporte une pompe à fluide pour faire circuler le fluide caloporteur dans la boucle de recirculation, le circuit de refroidissement comportant des moyens pour réguler automatiquement la température du fluide caloporteur qui comportent une unité électronique de commande qui commande l'ouverture de la vanne de renouvellement en fonction de paramètres de fonctionnement du circuit de refroidissement, et notamment en fonction de la température mesurée du fluide caloporteur dans la boucle de recirculation.

La fabrication de récipients, et notamment de bouteilles, en matériau thermoplastique, par exemple en polyéthylène téréphtalate (PET), est généralement réalisée à partir de préformes préalablement injectées qui sont conformées en bouteille par une opération de soufflage, ou d'étirage-soufflage de leur corps et de leur fond. Les préformes ont généralement une forme d'éprouvette dont le col a déjà la forme définitive du col de la bouteille. Le col comporte par exemple un filetage destiné à recevoir un bouchon à vis.

Avant de réaliser l'opération de soufflage, il est nécessaire de réchauffer une première partie de chaque préforme, comprenant le corps et le fond, à une température supérieure à la température de transition vitreuse du matériau thermoplastique dans un four de chauffage afin d'en ramollir la matière plastique constitutive.

A cet effet, on connaît déjà des fours de chauffage pour préformes du type qui comporte un tunnel longitudinal de chauffage. La préforme froide d'axe vertical est transportée par un dispositif de transport depuis une première extrémité du tunnel, puis elle circule le long du tunnel dans lequel la première partie de la préforme, comprenant le corps et le fond, est chauffée avant de ressortir par la seconde extrémité du tunnel. La préforme ainsi réchauffée est prête pour l'opération de soufflage.

Le four de chauffage peut comporter un ou plusieurs modules ou unités de chauffage qui comportent chacun une portion de tunnel et qui sont alignés les uns à la suite des autres de manière à former un tunnel unique de grande longueur. Dans la suite de la description, on assimilera le terme module de chauffage au terme four.

Par ailleurs, une paroi du tunnel est équipée de moyens de chauffage à rayonnement tandis que l'autre paroi est munie d'orifices d'aération pour permettre le passage d'air soufflé afin de favoriser un chauffage homogène dans toute l'épaisseur de la paroi cylindrique du corps de la préforme. En effet, l'air soufflé permet d'évacuer la chaleur de convection provoquée par les moyens de chauffage pour favoriser la pénétration du rayonnement qu'ils engendrent dans l'épaisseur de la matière thermoplastique constituant le corps.

Pour assurer le chauffage en profondeur du fond et de la paroi cylindrique du corps de la préforme sur toute sa périphérie, les préformes sont généralement mises en rotation sur elles-mêmes pendant leur circulation dans le four.

Cependant, le col de la préforme, qui est conformé à sa forme et à ses dimensions définitives lors de la fabrication, généralement par injection de la préforme, ne doit pas être déformé lors des opérations de chauffage et/ou de soufflage. Il est donc essentiel de maintenir le col à une température inférieure à la température de transition vitreuse ou température d'amollissement. A cet effet, le col de la préforme est maintenu à l'extérieur du tunnel à travers une ouverture du tunnel qui forme une rainure longitudinale de passage.

Dans de nombreuses installations, les préformes sont disposées le col en bas durant au moins une partie de leur chauffage. Ceci permet d'éviter ou de limiter un réchauffage du col par des mouvements ascendant de convection de l'air chaud.

Il est connu d'agencer des rampes de refroidissement latérales qui bordent l'ouverture longitudinale afin d'empêcher que la chaleur produite par les moyens de chauffage n'échauffe le col de la préforme par conduction, par convection ou par rayonnement.

Un fluide caloporteur froid circule à l'intérieur des rampes de refroidissement afin de protéger efficacement le col des préformes contre la chaleur du tunnel de chauffage. Ainsi, les rampes de refroidissement sont intercalées dans un circuit de refroidissement. L'alimentation en fluide caloporteur froid est commandée par l'intermédiaire d'une vanne de renouvellement du fluide.

De manière connue, la vanne de renouvellement de fluide est ouverte de manière à remplir les rampes de refroidissement avec du fluide caloporteur froid.

Puis, lorsque la vanne de renouvellement du fluide est fermée, le fluide caloporteur stagne dans les rampes de refroidissement. Une sonde de mesure de la température permet de surveiller la température du fluide caloporteur contenu dans les rampes de refroidissement en un point du circuit de refroidissement.

Lorsque le fluide caloporteur devient trop chaud pour que le col des préformes soit protégé efficacement, la vanne de renouvellement du fluide est ouverte et le fluide caloporteur chaud est remplacé par du fluide caloporteur froid.

Cependant, les moyens de chauffage sont susceptibles d'échauffer le fluide caloporteur plus rapidement en certains tronçons du tunnel de chauffage. En effet, en fonction de différents paramètres tels que la forme finale des bouteilles ou la forme des préformes, les moyens de chauffage sont susceptibles d'être réglés pour chauffer les préformes de manière différente selon leur position dans le tunnel.

Ainsi, le fluide caloporteur ne s'échauffe pas de façon homogène dans les rampes de refroidissement. La température mesurée en un unique point du circuit de refroidissement n'est donc pas toujours représentative de l'échauffement local du fluide caloporteur en certains points du circuit de refroidissement. En ces points locaux, les rampes de refroidissement sont susceptibles de ne plus protéger efficacement le col des préformes contre la chaleur.

De plus, lorsque le fluide caloporteur qui alimente le circuit de refroidissement est trop froid, de l'air chauffé par le four est susceptible de se condenser sur les rampes de refroidissement. Or la condensation peut aussi parasiter l'homogénéité du chauffage du corps de la préforme.

Le document DE-U-203.09.576 divulgue un circuit de refroidissement qui comporte une conduite d'entrée dans des éléments de refroidissement et une conduite de sortie. Une vanne de renouvellement du fluide caloporteur est intercalée dans la conduite de sortie du circuit. Une conduite de dérivation est raccordée entre la conduite de sortie et la conduite d'entrée de façon à former une boucle fermée de recirculation du fluide caloporteur dans les rampes de refroidissement lorsque la vanne de renouvellement est fermée. Le fluide caloporteur est mis en mouvement par une pompe.

L'ouverture de la vanne de renouvellement est commandée en fonction de la température mesurée du fluide caloporteur dans la boucle de recirculation. A cet effet, le circuit de refroidissement comporte des moyens pour mesurer la température du fluide caloporteur en un point du circuit.

Cependant, lorsque la pompe ne fonctionne pas de manière normale, le fluide caloporteur risque de surchauffer à certains endroits du circuit de refroidissement, alors que la température du fluide est normale au point de mesure de la température.

Afin de résoudre ces problèmes, l'invention propose un circuit de refroidissement du type décrit précédemment, caractérisé en ce que les moyens de régulation comportent des moyens de mesure du débit du fluide caloporteur qui sont intercalés dans la boucle de recirculation, et les moyens de régulation commandent l'ouverture de la vanne de renouvellement en fonction du débit mesuré de fluide caloporteur dans la boucle de recirculation.

Selon d'autres caractéristiques de l'invention :
- un clapet anti-retour est intercalé dans la conduite de dérivation ;
- chaque rampe de refroidissement comporte au moins un tronçon amont et un tronçon aval, l'extrémité aval du tronçon amont de chaque rampe de refroidissement étant raccordée à l'extrémité amont du tronçon aval de l'autre rampe de refroidissement.

L'invention propose aussi un procédé de mise en oeuvre des moyens de régulation de la température du circuit de refroidissement, caractérisé en ce qu'il comporte les étapes suivantes :
- une première étape, d'activation de la pompe à fluide, au cours de laquelle la vanne de renouvellement du fluide est fermée et la pompe à fluide est activée afin de faire circuler le fluide caloporteur dans la boucle de recirculation ;
- une deuxième étape, de contrôle de la température, au cours de laquelle la température du fluide caloporteur est mesurée dans la boucle de recirculation par l'intermédiaire des moyens de mesure de la température, la température mesurée étant ensuite comparée à un seuil supérieur de température ;
- une troisième étape, de renouvellement du fluide caloporteur, qui est déclenchée lorsque la température mesurée est supérieure ou égale au seuil supérieur de température, au cours de laquelle la vanne de renouvellement du fluide caloporteur est ouverte afin de faire sortir une portion du fluide caloporteur chaud de la boucle de recirculation par la conduite commune de sortie et de la remplacer par du fluide caloporteur froid entrant dans la boucle de recirculation par l'intermédiaire de la conduite commune d'entrée ;
- une quatrième étape, de fermeture de la vanne de renouvellement, qui est déclenchée lorsque la température mesurée atteint un seuil inférieur de température, le procédé étant ensuite réitéré à partir de la deuxième étape.

Selon d'autres caractéristiques du procédé :
- la deuxième étape de contrôle de la température comporte une opération de mesure du débit du fluide caloporteur par l'intermédiaire des moyens de mesure du débit, les seuils inférieur et supérieur de température étant variables en fonction du débit mesuré ;
- les seuils inférieur et supérieur de température ont une valeur normale lorsque le débit mesuré est supérieur à un seuil inférieur de débit et ils ont une valeur dégradée lorsque le débit mesuré est inférieur ou égal au seuil inférieur de débit.

D'autres caractéristiques et avantages de l'invention apparaîtront au cours de la lecture de la description détaillée qui va suivre pour la compréhension de laquelle on se reportera aux dessins en annexe, parmi lesquels :
- la figure 1 est une vue en coupe transversale qui représente un tunnel de chauffage à l'intérieur duquel le corps d'une préforme est chauffé, le col de la préforme étant maintenu sous le tunnel de façon à être protégé de la chaleur par deux rampes latérales de refroidissement qui sont alimentées en fluide caloporteur par un circuit de refroidissement ;
- la figure 2 est une vue de dessus qui représente schématiquement le circuit de refroidissement du tunnel de chauffage de la figure 1 qui est réalisé selon l'invention ;
- la figure 3 est un schéma-bloc qui représente un procédé de mise en oeuvre du circuit de refroidissement de la figure 2 ;
- la figure 4 est un schéma-bloc qui représente une variante du procédé de la figure 3.

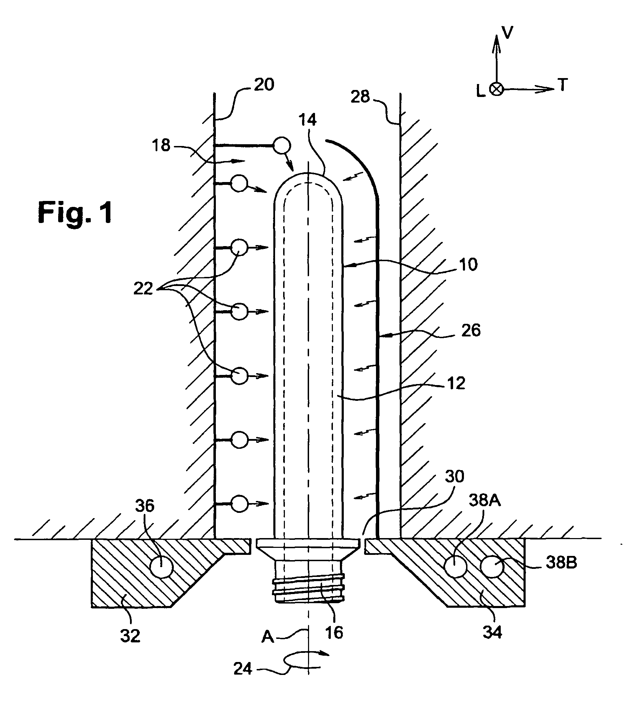

On adoptera dans la suite de la description, à titre non limitatif, une orientation longitudinale, verticale et transversale indiquée par le trièdre L, V, T de la figure 1.

On adoptera pour les fluides une direction d'écoulement orientée depuis l'amont vers l'aval.

On a représenté à la figure 1 une préforme 10 de récipient, obtenue par exemple par moulage par injection, qui présente un corps 12 sensiblement cylindrique de révolution d'axe A vertical avec une paroi épaisse. Une première extrémité, ici supérieure, de la préforme 10 est fermée par un fond 14 hémisphérique à paroi épaisse. L'autre extrémité, ici inférieure, comporte un col 16 conformé à sa forme et à ses dimensions définitives.

Comme expliqué en préambule, l'étape de chauffage préliminaire consiste à chauffer le corps 12 et le fond 14 de la préforme 10, en excluant le col 16, à une température supérieure à la température de transition vitreuse T du matériau thermoplastique constitutif de la préforme 10.

Comme représenté à la figure 1, le chauffage est effectué en faisant défiler les préformes 10 dans un tunnel 18 de chauffage d'orientation horizontale, comportant au moins une paroi 20 chauffante latérale verticale qui comporte des moyens de chauffage.

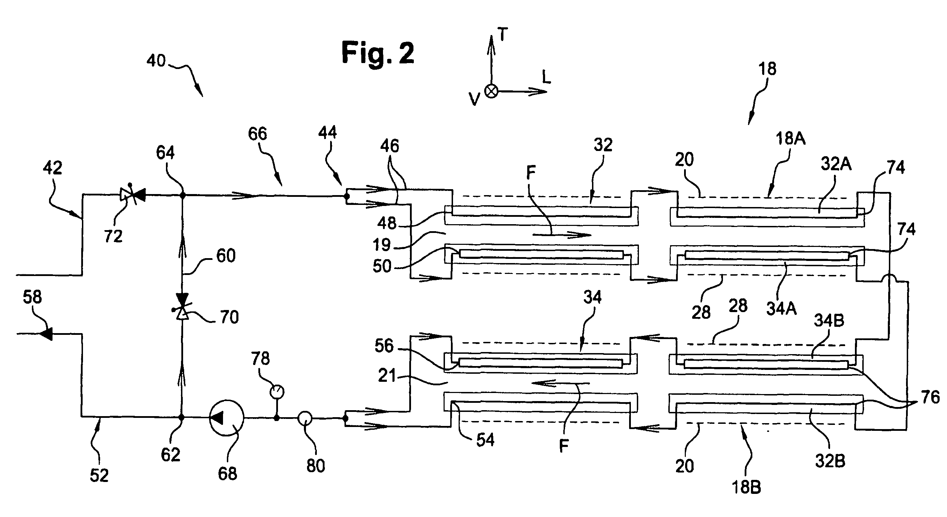

Comme représenté à la figure 2, le tunnel 18 de chauffage comporte deux portions 18A, 18B longitudinales parallèles. Les préformes 10 défilent successivement dans la première portion 18A depuis une extrémité proximale d'entrée 19 du tunnel 18 vers une extrémité distale, puis, après un virage à 180°, elles défilent dans la seconde portion 18B en sens opposé, depuis l'extrémité distale vers l'extrémité de sortie 21 proximale du tunnel 18, de sorte que l'extrémité proximale de sortie 21 du tunnel 18 de chauffage est à proximité de l'entrée 19 proximale du tunnel 18 de chauffage.

Cependant, l'invention est aussi applicable à des tunnels de chauffage de formes différentes, par exemple des tunnels rectilignes longitudinaux ou des tunnels semi-circulaires.

Dans l'exemple représenté à la figure 2, les parois du tunnel de chauffage sont représentées en traits interrompus. La paroi 20 chauffante est agencée du côté « externe » du four, visible sur cette figure à gauche des préformes 10 par rapport leur sens de déplacement indiqué par les flèches F.

Comme représenté à la figure 1, les moyens de chauffage comportent ici sept tubes 22 de chauffage longitudinaux qui sont montés les uns au-dessus des autres sur la paroi 20 chauffante. De façon connue, les tubes 22 de chauffage sont des lampes qui émettent des rayons infrarouges de longueur d'onde adaptée pour chauffer par rayonnement le matériau thermoplastique constitutif des préformes 10.

De préférence, les tubes 22 de chauffage sont montés de façon à pouvoir régler indépendamment la distance transversale de chaque tube 22 de chauffage par rapport aux préformes 10 circulant dans le tunnel 18.

De façon connue, le tunnel 18 de chauffage est divisé en plusieurs tronçons dans lesquels les moyens de chauffage sont réglés de façon à chauffer plus ou moins différentes parties du corps 12 et du fond 14 des préformes 10 au cours d'un même passage dans le tunnel 18 de chauffage.

On distingue notamment un premier tronçon ou zone de « pénétration » dans lequel les tubes 22 de chauffage sont réglés de manière à chauffer l'ensemble du corps 12 et du fond 14 des préformes 10 à une température proche de sa valeur finale, et un second tronçon ou zone de « chauffe profil » dans laquelle les tubes 22 sont réglées indépendamment de manière à chauffer plus spécifiquement certaines parties du corps 12 ou du fond 14 des préformes 10 en fonction de la forme finale qui sera conférée aux récipients issus des préformes 10 lors des étapes suivant l'étape de chauffage.

Par exemple, la zone de pénétration peut correspondre à la première portion 18A longitudinale du tunnel de chauffage et la zone de « chauffe profil » peut correspondre à la seconde portion 18B longitudinale du tunnel de chauffage.

De manière à homogénéiser le chauffage, les préformes 10 sont simultanément mises en rotation autour de leur axe A comme indiqué par la flèche 24.

Un panneau réfléchissant 26 peut de préférence être agencé sur une paroi 28 latérale verticale opposée du tunnel 18 de chauffage en regard des tubes 22 de chauffage pour réfléchir vers les corps 12 des préformes 10 la fraction du rayonnement chauffant passant entre deux préformes 10 successives. La paroi 28 latérale opposée sera donc appelée paroi 28 réfléchissante dans la suite de la description.

Afin de ne pas chauffer le col 16, le tunnel 18 de chauffage comporte une ouverture 30 longitudinale inférieure qui est délimitée latéralement par les bords inférieurs longitudinaux de la parois 28 réfléchissante. Le col 16 est ainsi maintenu à l'extérieur du tunnel 18 de chauffage, sous l'ouverture 30, pendant que le corps 12 et le fond 14 de la préforme 10 sont chauffés dans le tunnel 18 de chauffage.

Dans le mode de réalisation représenté à la figure 1, l'ouverture 30 longitudinale est située sous le tunnel 18 de chauffage, mais l'invention est aussi applicable à des tunnels de chauffage munis d'une ouverture supérieure. Dans cette dernière configuration, les préformes 10 défilent alors verticalement, le col 16 étant dirigé vers le haut.

L'invention est aussi applicable à des tunnels de chauffage du type « chenille » (non représentés) qui comportent une partie dans laquelle les préformes 10 sont réchauffées col 16 en haut et une autre partie dans laquelle les préformes 10 sont réchauffées col 16 en bas.

Deux rampes 32, 34 de refroidissement longitudinales parallèles en forme de rails sont agencées sous la paroi 20 chauffante et la paroi 28 réfléchissante, de façon à border l'ouverture 30 longitudinale. Chaque rampe 32, 34 de refroidissement s'étend transversalement jusqu'au col 16 des préformes 10 mais sans les toucher de façon à rendre plus étroite l'ouverture 30 longitudinale inférieure. Les rampes 32, 34 de refroidissement ont notamment pour fonction de protéger thermiquement le col 16 contre la chaleur qui règne dans le tunnel 18 de chauffage.

De façon connue, une ou plusieurs conduites 36, 38A, 38B de refroidissement longitudinales débouchantes sont formée à l'intérieur des rampes 32, 34 de refroidissement de manière à ce qu'un fluide caloporteur froid puisse circuler dans les rampes 32, 34 de refroidissement pour les refroidir. Le fluide caloporteur est par exemple du glycol dilué dans de l'eau.

Les rampes 32, 34 de refroidissement sont par exemple réalisées en aluminium de façon que la chaleur produite dans le tunnel 18 de chauffage soit communiquée par conduction jusqu'au fluide caloporteur contenu dans les conduites 36, 38A, 38B de refroidissement.

Les rampes 32, 34 de refroidissement sont raccordées à un circuit 40 de refroidissement. On a représenté schématiquement à la figure 2 le circuit 40 de refroidissement du tunnel 18 de chauffage.

La première rampe 32externe de refroidissement, qui est située sous la paroi 20 chauffante, comporte ici une unique conduite 36 de refroidissement. La seconde rampe 34 interne de refroidissement, qui est située sous la paroi 28 réfléchissante, comporte ici deux conduites 38A, 38B de refroidissement.

En effet la première rampe 32 externe de refroidissement doit absorber une plus grande quantité de chaleur que la seconde rampe 34 externe de refroidissement car elle est agencée face aux tubes 22 de chauffage.

Le circuit 40 de refroidissement comporte une conduite 42 commune d'entrée dont l'extrémité aval 44 comporte des ramifications 46 de façon à alimenter parallèlement en fluide caloporteur l'extrémité amont 48, 50 de chaque rampe 32, 34 de refroidissement.

Une conduite 52 commune de sortie du fluide caloporteur est raccordée à l'extrémité aval 54, 56 de chaque rampe 32, 34 de refroidissement de façon à évacuer le fluide caloporteur devenu chaud.

Le circuit 40 de refroidissement comporte aussi une vanne 58 de renouvellement du fluide caloporteur qui est intercalée dans la conduite 52 commune de sortie. Il s'agit ici d'une électrovanne.

Selon une variante de réalisation (non représentée), la vanne 58 de renouvellement est intercalée dans la conduite 42 commune d'entrée.

Le tunnel 18 de chauffage comportant deux tronçons parallèles, la rampe 32 externe de refroidissement est divisée en deux tronçons longitudinaux amont et aval qui sont indiqués par les références 32A et 32B respectivement. Chaque tronçon longitudinal amont 32A, respectivement aval 32B, est agencé sur la première portion 18A, respectivement 18B, du tunnel 18 de chauffage.

De la même façon, la rampe 34 interne de refroidissement est divisée en deux tronçons longitudinaux amont et aval qui sont indiqués par les références 34A, 34B respectivement.

Selon les enseignements de l'invention, le circuit 40 de refroidissement comporte une conduite 60 de dérivation dont une extrémité amont 62 est raccordée à la conduite 52 commune de sortie, en amont de la vanne 58 de renouvellement, et dont l'extrémité aval 64 est raccordée à la conduite 42 commune d'entrée. Lorsque la vanne 58 de renouvellement est fermée, le circuit 40 de refroidissement comporte ainsi une boucle 66 de recirculation fermée du fluide caloporteur.

La boucle 66 de recirculation comporte la conduite 60 de dérivation, le tronçon de la conduite 42 commune d'entrée qui est compris entre l'extrémité aval 64 de la conduite 60 de dérivation et les extrémités amont 48, 50 des rampes 32, 34 de refroidissement, les rampes 32, 34 de refroidissement, et le tronçon de la conduite 52 commune de sortie qui est compris entre les extrémités aval 54, 56 des rampes 32, 34 de refroidissement et l'extrémité amont 62 de la conduite 60 de dérivation.

Une pompe 68 à fluide est intercalée dans la boucle 66 de recirculation afin de mettre le fluide caloporteur en mouvement, de façon qu'il circule selon un sens horaire dans la boucle 66 de recirculation en regardant la figure 2 lorsque la vanne 58 de renouvellement est fermée. La pompe 68 à fluide est ici intercalée dans la conduite 52 commune de sortie, en amont de l'extrémité amont 62 de la conduite 60 de dérivation.

Un premier clapet anti-retour 70 est intercalé dans la conduite 60 de dérivation afin d'empêcher le fluide de tourner à contresens, c'est-à-dire dans un sens anti-horaire, dans la boucle 66 de recirculation.

Un second clapet anti-retour 72 est intercalé dans la conduite 42 commune d'entrée, en amont de l'extrémité aval 64 de la conduite 60 de dérivation, afin d'empêcher le fluide caloporteur d'être refoulé à contresens vers l'extrémité amont de la conduite 42 commune d'entrée.

De préférence, afin de favoriser l'homogénéisation rapide de la température du fluide caloporteur dans toute la boucle 66 de recirculation, les conduites de raccord des tronçons amont 32A, 34A et aval 32B 34B des rampes 32, 34 de refroidissement sont intervertis. Ainsi, l'extrémité aval 74 du tronçon amont 32A, 34A de chaque rampe de refroidissement 32, 34 est raccordée à l'extrémité amont 76 du tronçon aval de l'autre rampe de refroidissement 34, 32.

Dans une variante de l'invention, il est possible de diviser les rampes 32, 34 de refroidissement en plus de deux tronçons et d'intervertir de la même manière les raccords entre deux tronçons successifs afin d'améliorer encore l'homogénéisation de la température du fluide caloporteur.

Le circuit 40 de refroidissement comporte aussi des moyens de régulation automatiques de la température du fluide caloporteur. Ces moyens de régulation comportent ici des moyens 78 de mesure de la température du fluide caloporteur, tels qu'une sonde, en un point de la boucle 66 de recirculation. La sonde est ici implantée dans la conduite 52 commune de sortie.

Les moyens de régulation comportent aussi une unité électronique de commande (non représentée) qui est raccordé électriquement aux moyens 78 de mesure de la température, à la pompe 68 à fluide et à la vanne 58 de renouvellement.

Selon les enseignements de l'invention, les moyens de régulation de la température sont mis en oeuvre selon un procédé de régulation de la température qui va être décrit par la suite.

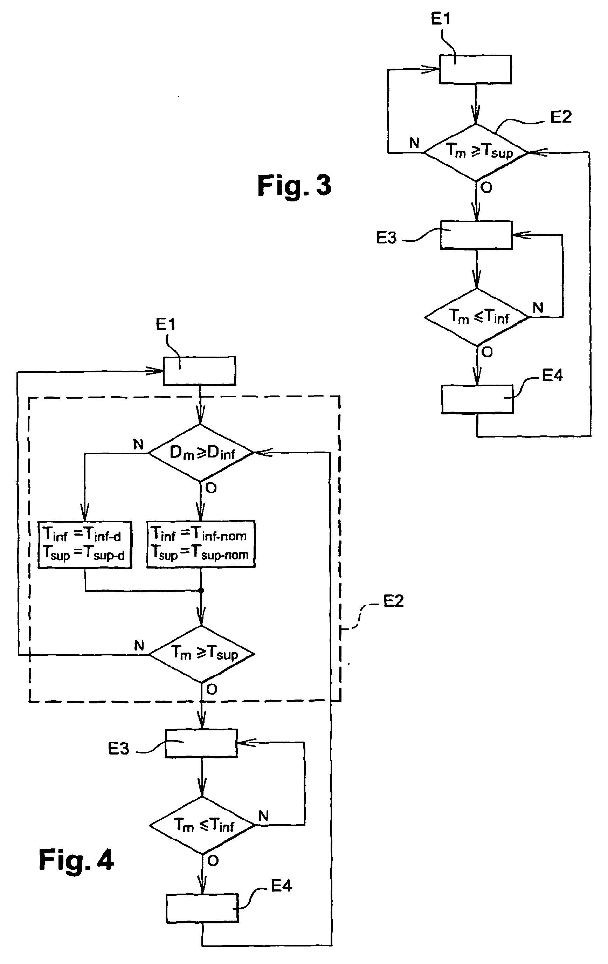

Comme illustré à la figure 3, le procédé de régulation de la température du fluide caloporteur comporte principalement quatre étapes.

Lors d'une première étape E1 d'activation de la pompe 68 à fluide, la vanne 58 de renouvellement du fluide est fermée, ou reste en position fermée si elle était déjà fermée, et la pompe 68 à fluide est activée afin de faire circuler le fluide caloporteur dans la boucle 66 de recirculation.

En prenant comme point de départ l'extrémité aval 64 de la conduite 60 de dérivation, le fluide caloporteur s'écoule dans la conduite 42 commune d'entrée en direction de l'extrémité amont 48, 50 des rampes 32, 34 de refroidissement. Le fluide caloporteur est ensuite réparti dans chacune des rampes 32, 34 de refroidissement, puis il est évacué dans la conduite 52 commune de sortie. La vanne 58 de renouvellement étant fermée, le fluide caloporteur emprunte la conduite 60 de dérivation pour revenir au point de départ.

Puis, lors d'une deuxième étape E2 de contrôle de la température, la température du fluide caloporteur est mesurée dans la boucle 66 de recirculation par l'intermédiaire des moyens 78 de mesure de la température.

La température mesurée Tm est ensuite comparée à un seuil supérieur Tsup de température au-delà duquel on estime que le col 16 de la préforme 10 n'est plus protégé efficacement par les rampes 32, 34 de refroidissement.

Le fluide caloporteur étant en mouvement dans la boucle 66 de recirculation, la température mesurée Tm par les moyens 78 de mesure de la température en un point de la boucle 66 de recirculation est sensiblement représentative de la température du fluide caloporteur en tout point de la boucle 66 de recirculation.

En effet, la rampe 34 interne de refroidissement étant plus exposée au rayonnement infrarouge des tubes 22 de chauffage, la température du fluide caloporteur qui y coule augmente plus vite que dans l'autre rampe 32 externe de refroidissement. Mais, lorsque le fluide caloporteur ainsi chauffé franchit les raccords d'extrémité entre les deux rampes 32, 34 de refroidissement, il alimente alors la rampe 32 externe de refroidissement qui est moins chaude que la rampe interne de refroidissement 34.

Le fluide caloporteur sortant de la rampe 34 interne de refroidissement et le fluide caloporteur sortant de la rampe 32 externe de refroidissement pour s'écouler dans la conduite 52 commune de sortie, sont globalement à la même température. De plus le mélange des fluides dans les conduites communes permet une homogénéisation totale de la température.

Lorsque la température mesurée Tm est supérieure ou égale au seuil supérieur Tsup de température, une troisième étape E3, de renouvellement du fluide caloporteur, est déclenchée. La vanne 58 de renouvellement du fluide caloporteur est alors ouverte afin de faire sortir une portion du fluide caloporteur chaud de la boucle 66 de recirculation par la conduite 52 commune de sortie et de la remplacer par du fluide caloporteur froid entrant dans la boucle 66 de recirculation par l'intermédiaire de la conduite 42 commune d'entrée.

Enfin, lorsque la température mesurée Tm atteint un seuil inférieur Tinf de température, une quatrième étape de fermeture de la vanne 58 de renouvellement est déclenchée.

Le seuil inférieur Tinf de température correspond à une température en deçà de laquelle l'air est susceptible de se condenser sur les rampes 32, 34 de refroidissement et de former des gouttelettes d'eau néfastes pour le chauffage de la préforme 10.

Le procédé est ensuite réitéré à partir de la deuxième étape E2.

Le circuit 40 de refroidissement comporte aussi des moyens 80 de mesure du débit du fluide caloporteur, qui sont reliés électriquement à l'unité électronique de commande. Il s'agit ici d'un débitmètre 80. Ainsi, il est possible de repérer un éventuel dysfonctionnement de la pompe 68 à fluide.

Les moyens de régulation de la température sont alors susceptibles d'être commandés selon un mode dégradé du procédé précédemment décrit, comme illustré à la figure 4.

Pour ce faire, la deuxième étape E2, de contrôle de la température, comporte une opération supplémentaire de mesure du débit du fluide caloporteur par l'intermédiaire des moyens 80 de mesure du débit.

Les seuils inférieur Tinf et supérieur Tsup de température sont alors modifiés en fonction du débit mesuré Dm.

Par exemple, les seuils inférieur Tinf et supérieur Tsup de température ont une valeur « normale » Tinf_nom, Tsup_nom lorsque le débit mesuré Dm est supérieur à un seuil inférieur de débit Dinf, c'est-à-dire lorsque la pompe 68 à fluide est fonctionnelle.

Lorsque le débit mesuré Dm est inférieur ou égal au seuil inférieur de débit Dinf, c'est-à-dire que la pompe 68 à fluide ne fonctionne plus ou mal, une valeur dégradée Tinf_d, Tsup_d est affectée aux seuils inférieur Tinf et supérieur Tsup de température.

En effet, la température mesurée Tm par les moyens 78 de mesure de la température n'est alors plus représentative de la température du fluide caloporteur en tout point de la boucle 66 de recirculation. Il est donc nécessaire de renouveler le fluide caloporteur plus fréquemment pour éviter qu'il ne surchauffe en un point de la boucle 66 de recirculation, notamment dans certaines zones telles que la zone de pénétration ou la zone de « chauffe profil ».

## Revendications

1. Circuit (40) de refroidissement pour un tunnel (18) de chauffage de préformes (10) du type comportant une première rampe (32) et une seconde rampe (34) parallèles de refroidissement, à l'intérieur desquelles circule un fluide caloporteur, et qui bordent une ouverture (30) longitudinale du tunnel (18) de chauffage le long de laquelle les préformes (10) sont déplacées, du type comportant une conduite (42) commune d'entrée qui est alimentée en fluide caloporteur froid et qui est raccordée en parallèle à une extrémité amont (48, 50) de chaque rampe (32, 34) de refroidissement, et comportant une conduite (52) commune de sortie du fluide caloporteur chaud qui est raccordée en parallèle à l'extrémité aval (54, 56) de chaque rampe (32, 34) de refroidissement, du type comportant une vanne (58) de renouvellement du fluide caloporteur qui est intercalée dans l'une des conduites (42) communes d'entrée ou de sortie (52), le circuit de refroidissement (40) comportant des moyens (78) pour mesurer la température du fluide caloporteur, du type comportant une conduite (60) de dérivation dont l'extrémité amont (62) est raccordée à la conduite (52) commune de sortie et dont l'extrémité aval (64) est raccordée à la conduite (42) commune d'entrée de façon à former une boucle (66) fermée de recirculation du fluide caloporteur dans les rampes (32, 34) de refroidissement lorsque la vanne (58) de renouvellement est fermée, et du type dans lequel la boucle (66) de recirculation comporte une pompe (68) à fluide pour faire circuler le fluide caloporteur dans la boucle (66) de recirculation, le circuit de refroidissement (40) comportant des moyens pour réguler automatiquement la température du fluide caloporteur qui comportent une unité électronique de commande qui commande l'ouverture de la vanne (58) de renouvellement en fonction de paramètres de fonctionnement du circuit de refroidissement, et notamment en fonction de la température mesurée (Tm) du fluide caloporteur dans la boucle (66) de recirculation,
**caractérisé en ce que** les moyens de régulation comportent des moyens (80) de mesure du débit du fluide caloporteur qui sont intercalés dans la boucle de recirculation (66), et **en ce que** les moyens de régulation commandent l'ouverture de la vanne de renouvellement (58) en fonction du débit mesuré (Dm) de fluide caloporteur dans la boucle (66) de recirculation.

2. Circuit (40) de refroidissement selon la revendication précédente, **caractérisé en ce qu'**un clapet anti-retour (70) est intercalé dans la conduite (60) de dérivation.

3. Circuit (40) de refroidissement selon l'une quelconque des revendications précédentes, du type dans lequel la seconde rampe (34) de refroidissement doit absorber une plus grande quantité de chaleur que la première rampe (32) de refroidissement, **caractérisé en ce que** chaque rampe (32, 34) de refroidissement comporte au moins un tronçon amont (32A, 32B) et un tronçon aval (32B, 34B), l'extrémité aval (74) du tronçon amont (32A, 34A) de chaque rampe (32, 34) de refroidissement étant raccordée à l'extrémité amont (76) du tronçon aval (32B, 34B) de l'autre rampe (32, 34) de refroidissement.

4. Procédé de mise en oeuvre des moyens de régulation de la température du circuit de refroidissement réalisé selon l'une quelconque des revendications 1 à 3, qui comporte les étapes suivantes :
- une première étape (E1), d'activation de la pompe (68) à fluide, au cours de laquelle la vanne (58) de renouvellement du fluide est fermée et la pompe (68) à fluide est activée afin de faire circuler le fluide caloporteur dans la boucle (66) de recirculation ;
- une deuxième étape (E2), de contrôle de la température, au cours de laquelle la température mesurée (Tm) du fluide caloporteur est mesurée dans la boucle (66) de recirculation par l'intermédiaire des moyens (78) de mesure de la température, la température mesurée (Tm) étant ensuite comparée à un seuil supérieur (Tsup) de température ;
- une troisième étape (E3), de renouvellement du fluide caloporteur, qui est déclenchée lorsque la température mesurée (Tm) est supérieure ou égale au seuil supérieur (Tsup) de température, au cours de laquelle la vanne (58) de renouvellement du fluide caloporteur est ouverte afin de faire sortir une portion du fluide caloporteur chaud de la boucle (66) de recirculation par la conduite (52) commune de sortie et de la remplacer par du fluide caloporteur froid entrant dans la boucle (66) de recirculation par l'intermédiaire de la conduite (42) commune d'entrée ;
- une quatrième étape (E4), de fermeture de la vanne (58) de renouvellement, qui est déclenchée lorsque la température mesurée (Tm) atteint un seuil inférieur (Tinf) de température, le procédé étant ensuite réitéré à partir de la deuxième étape (E2).
**caractérisé en ce que** la deuxième étape (E2), de contrôle de la température, comporte une opération de mesure du débit du fluide caloporteur par l'intermédiaire des moyens (80) de mesure du débit, les seuils inférieur (Tinf) et supérieur (Tsup) de température étant variables en fonction du débit mesuré (Dm).

5. Procédé selon la revendication précédente, **caractérisé en ce que** les seuils inférieur (Tinf) et supérieur (Tsup) de température ont une valeur normale (Tinf_nom, Tsup_nom) lorsque le débit mesuré (Dm) est supérieur à un seuil inférieur de débit (Dinf) et ils ont une valeur dégradée (Tinf_d, Tsup_d) lorsque le débit mesuré (Dm) est inférieur ou égal au seuil inférieur de débit (Dinf).

## Claims

1. Cooling circuit (40) for a tunnel (18) for heating preforms (10) of the type comprising a parallel first cooling rail (32) and second cooling rail (34), inside which rails a coolant fluid circulates and which rails border a longitudinal opening (30) of the heating tunnel (18), along which the preforms (10) are displaced, of the type comprising a common inlet pipe (42) which is supplied with cold coolant fluid and is connected in parallel to an upstream end (48, 50) of each cooling rail (32, 34), and comprising a common outlet pipe (52) for the hot coolant fluid which is connected in parallel to the downstream end (54, 56) of each cooling rail (32, 34), of the type comprising a valve (58) for replacement of the coolant fluid which is connected in one of the common inlet (42) or outlet (52) pipes, the cooling circuit (40) comprising means (78) for measuring the temperature of the coolant fluid, of the type comprising a bypass (60), the upstream end (62) of which is connected to the common outlet pipe (52) and the downstream end (64) of which is connected to the common inlet pipe (42) so as to form a closed loop (66) for recirculation of the coolant fluid in the cooling rails (32, 34) when the replacement valve (58) is closed, and of the type in which the recirculation loop (66) comprises a fluid pump (68) for making the coolant fluid circulate in the recirculation loop (66), the cooling circuit (40) comprising means for automatically regulating the temperature of the coolant fluid which comprise an electronic control unit which controls the opening of the replacement valve (58) as a function of operating parameters of the cooling circuit, and in particular as a function of the measured temperature (Tm) of the coolant fluid in the recirculation loop (66),
**characterized in that** the regulating means comprise means (80) for measuring the flow of the coolant fluid which are connected in the recirculation loop (66), and **in that** the regulating means control the opening of the replacement valve (58) as a function of the measured flow (Dm) of coolant fluid in the recirculation loop (66).

2. Cooling circuit (40) according to the preceding claim, **characterized in that** a non-return valve (70) is connected in the bypass (60).

3. Cooling circuit (40) according to either of the preceding claims, of the type in which the second cooling rail (34) has to absorb a greater quantity of heat than the first cooling rail (32), **characterized in that** each cooling rail (32, 34) comprises at least one upstream section (32A, 32B) and one downstream section (32B, 34B), the downstream end (74) of the upstream section (32A, 34A) of each cooling rail (32, 34) being connected to the upstream end (76) of the downstream section (32B, 34B) of the other cooling rail (32, 34).

4. Method for implementing the means for regulating the temperature of the cooling circuit made according to Claims 1 to 3, which comprises the following steps:
a first step (E1), of activation of the fluid pump (68), during which the fluid replacement valve (58) is closed and the fluid pump (68) is activated in order to make the coolant fluid circulate in the recirculation loop (66);
a second step (E2), of temperature control, during which the temperature of the coolant fluid is measured in the recirculation loop (66) by the temperature measurement means (78), the measured temperature (Tm) then being compared with an upper temperature threshold (Tsup);
a third step (E3), of replacement of coolant fluid, which is initiated when the measured temperature (Tm) is greater than or equal to the upper temperature threshold (Tsup), during which the coolant fluid replacement valve (58) is opened in order to make a portion of the hot coolant fluid leave the recirculation loop (66) via the common outlet pipe (52) and to replace it with cold coolant fluid entering the recirculation loop (66) by means of the common inlet pipe (42);
a fourth step (E4), of closing of the replacement valve (58), which is initiated when the measured temperature (Tm) reaches a lower temperature threshold (Tinf), the method then being repeated starting from the second step (E2),
**characterized in that** the second step (E2), of temperature control, comprises an operation for measuring the flow of the coolant fluid by the flow measurement means (80), the lower (Tinf) and upper (Tsup) temperature thresholds being variable as a function of the measured flow (Dm).

5. Method according to the preceding claim, **characterized in that** the lower (Tinf) and upper (Tsup) temperature thresholds have a normal value (Tinf_nom, Tsup_nom) when the measured flow (Dm) is higher than a lower flow threshold (Dinf) and they have a reduced value (Tinf_d, Tsup_d) when the measured flow (Dm) is lower than or equal to the lower flow threshold (Dinf).

## Patentansprüche

1. Kühlkreis (40) für einen Tunnel (18) zum Erwärmen von Vorformlingen (10) des Typs, der eine erste Kühlrampe (32) und eine hierzu parallele zweite Kühlrampe (34) enthält, in denen ein Wärmeträgerfluid zirkuliert und die an eine longitudinale Öffnung (30) des Heiztunnels (18) angrenzen, längs dessen die Vorformlinge (10) verlagert werden, des Typs, der eine gemeinsame Eingangsleitung (42) enthält, die mit einem kalten Wärmeträgerfluid gespeist wird und die mit einem stromaufseitigen Ende (48, 50) jeder Kühlrampe (32, 34) parallel verbunden ist, und der eine gemeinsame Ausgangsleitung (52) für heißes Wärmeträgerfluid aufweist, die mit dem stromabseitigen Ende (54, 56) jeder Kühlrampe (32, 34) parallel verbunden ist, des Typs, der einen Schieber (58) für die Erneuerung des Wärmeträgerfluids aufweist, der in die gemeinsame Eingangsleitung (42) oder in die gemeinsame Ausgangsleitung (52) eingefügt ist, wobei der Kühlkreis (40) Mittel (78) aufweist, um die Temperatur des Wärmeträgerfluids zu messen, des Typs, der eine Abzweigleitung (60) aufweist, wovon ein stromaufseitiges Ende (62) mit der gemeinsamen Ausgangsleitung (52) verbunden ist und wovon ein stromabseitiges Ende (64) mit der gemeinsamen Eingangsleitung verbunden ist, derart, dass ein geschlossener Umwälzkreis (66) für das Wärmeträgerfluid in den Kühlrampen (32, 34) gebildet wird, wenn der Erneuerungsschieber (58) geschlossen ist, und des Typs, in dem der Umwälzkreis (66) eine Fluidpumpe (68) aufweist, um das Wärmeträgerfluid in dem Umwälzkreis (66) umzuwälzen, wobei der Kühlkreis (40) Mittel, um die Temperatur des Wärmeträgerfluids automatisch zu regulieren, umfasst, die eine elektronische Steuereinheit enthalten, die das Öffnen des Erneuerungsschiebers (58) als Funktion von Betriebsparametern des Kühlkreises und insbesondere als Funktion der gemessenen Temperatur (Tm) des Wärmeträgerfluids im Umwälzkreis (66) steuert, **dadurch gekennzeichnet, dass** die Regulierungsmittel Mittel (80) zum Messen des Wärmeträgerfluid-Durchflusses enthalten, die in den Umwälzkreis (66) eingefügt sind, und dass die Regulierungsmittel das Öffnen des Erneuerungsschiebers (58) als Funktion des gemessenen Durchflusses (Dm) des Wärmeträgerfluids im Umwälzkreis (66) steuern.

2. Kühlkreis(40) nach dem vorhergehenden Anspruch, **dadurch gekennzeichnet, dass** in die Abzweigleitung (60) eine Rückschlagverhinderungsklappe (70) eingefügt ist.

3. Kühlkreis(40) nach einem der vorhergehenden Ansprüche des Typs, in dem die zweite Kühlrampe (34) eine größere Wärmemenge als die erste Kühlrampe (32) absorbieren muss, **dadurch gekennzeichnet, dass** jede Kühlrampe (32, 34) wenigstens ein stromaufseitiges Teilstück (32A, 32B) und ein stromabseitiges Teilstück (32B, 34B) aufweist, wobei das stromabseitige Ende (74) des stromaufseitigen Teilstücks (32A, 34A) jeder Kühlrampe (32, 34) mit dem stromaufseitigen Ende (76) des stromabseitigen Teilstücks (32B, 34B) der anderen Kühlrampe (32, 34) verbunden ist.

4. Verfahren zum Betreiben der Mittel zum Regulieren der Temperatur des Kühlkreises nach einem der Ansprüche 1 bis 3, das die folgenden Schritte umfasst:
- einen ersten Schritt (E1) des Aktivierens der Fluidpumpe (68), in dem der Fluiderneuerungsschieber (58) geschlossen ist und die Fluidpumpe (68) aktiviert ist, um das Wärmeträgerfluid im Umwälzkreis (66) umzuwälzen;
- einen zweiten Schritt (E2) des Steuerns der Temperatur, in dem die gemessene Temperatur (Tm) des Wärmeträgerfluids im Umwälzkreis (66) durch Mittel (78) zum Messen der Temperatur gemessen wird, wobei die gemessene Temperatur (Tm) anschließend mit einem oberen Schwellenwert (Tsup) der Temperatur verglichen wird;
- einen dritten Schritt (E3) des Erneuerns des Wärmeträgerfluids, der begonnen wird, wenn die gemessene Temperatur (Tm) größer oder gleich dem oberen Schwellenwert (Tsup) der Temperatur ist, und in dem der Wärmeträgerfluid-Erneuerungsschieber (58) offen ist, um einen Teil des heißen Wärmeträgerfluids aus dem Umwälzkreis (66) durch die gemeinsame Ausgangsleitung (52) abzuführen und durch ein kaltes Wärmeträgerfluid zu ersetzen, das durch die gemeinsame Eingangsleitung (42) in den Umwälzkreis (66) eintritt;
- einen vierten Schritt (E4) des Schließens des Erneuerungsschiebers (58), der begonnen wird, wenn die gemessene Temperatur (Tm) einen unteren Schwellenwert (Tinf) der Temperatur erreicht, wobei das Verfahren anschließend ausgehend von dem zweiten Schritt (E2) wiederholt wird,
**dadurch gekennzeichnet, dass** der zweite Schritt (E2) des Steuerns der Temperatur eine Operation des Messens des Durchflusses des Wärmeträgerfluids mittels der Mittel (80) zum Messen des Durchflusses umfasst, wobei der untere Schwellenwert (Tinf) und der obere Schwellenwert (Tsup) für die Temperatur als Funktion des gemessenen Durchflusses (Dm) variabel sind.

5. Verfahren nach dem vorhergehenden Anspruch, **dadurch gekennzeichnet, dass** der untere Schwellenwert (Tinf) und der obere Schwellenwert (Tsup) für die Temperatur einen Nennwert (Tinf_nom, Tsup_nom) haben, wenn der gemessene Durchfluss (Dm) größer als ein unterer Schwellenwert (Dinf) für den Durchfluss ist, und einen verringerten Wert (Tinf_d, Tsup_d) haben, wenn der gemessene Durchfluss (Dm) kleiner oder gleich dem unteren Schwellenwert (Dinf) für den Durchfluss ist.
